# EUROPEAN PATENT APPLICATION

(11) **EP 4 336 691 A1**
(43) Date of publication of application: **13.03.2024**
(21) Application number: 22382842.7
(22) Date of filing: 12.09.2022
(51) Int. Cl.: H02J 3/01, H02J 3/14, H02J 3/38, H02J 13/00

(54) **IOT PLATFORM FOR DIAGNOSIS AND MANAGEMENT OF POWER QUALITY IN MICROGRIDS**

(71) Applicant: Universidad De Córdoba, 14005 Córdoba (ES)
(72) Inventor: GARRIDO ZAFRA, Joaquin, 14005 Córdoba (ES); GIL DE CASTRO, Aurora, 14005 Córdoba (ES); MORENO MUÑOZ, Antonio, 14005 Córdoba (ES)
(74) Representative: TRBL Intellectual Property

(57) **Abstract**

The invention provides a system for managing the power quality of a microgrid. The system comprises a main supply network (3), a plurality of control devices (4) and a management unit (7). Each control device (4) is associated to one of the apparatuses (1, 2), and is configured to receive operation data from its associated apparatus (1, 2) and configured to send these operation data via a MQTT protocol. The management unit (7) is configured to receive the processed data from the control devices, the control unit comprising processing means configured to assess received processed data and to prepare instructions to the control devices. The management unit (7) is configured to send instructions to the control devices and each control device has actuators to actuate on its associated apparatus.

## Description

### TECHNICAL FIELD

This invention belongs to the field of devices and systems for the management of the power quality of a microgrid.

### STATE OF THE ART

The importance of reliable, high-quality electrical power continues to grow as the ongoing digitization of our society broadens and deepens. Electronic equipment can be both a source and a victim of poor power quality. Industrial and digital companies incur heavy losses every year due to power disturbances. Of course, these costs depend on the duration of the disruption. Still, even short interruptions are costly, as they may require restarting systems to return them to their previous state of availability.

In addition, the integration of distributed energy resources can lead to quality of service problems and violations of operational limits in the electricity system when their penetration exceeds a certain value, called the carrying capacity. Demand-side flexibility strategies can be used to address the hosting capacity under Power Quality constraints.

It is not always easy to design a system for managing the power quality of a microgrid which includes power generation devices and power consumption devices; the different operation parameters must be depending on the operation of different devices in different scenarios at the same time.

### DESCRIPTION OF THE INVENTION

The invention provides an alternative solution for this problem by means of a system according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a system for managing the power quality of a microgrid, the microgrid comprising a plurality of apparatuses, wherein the system comprises:
a main supply network, where the apparatuses are connected;
a plurality of control devices, each control device being associated to one of the apparatuses, wherein each control device is configured to receive operation data from its associated apparatus and configured to send these operation data via a MQTT protocol;
a control device arranged at the entry of the main supply network, the control device being configured to receive operation data from its associated apparatus and configured to send processed data via a MQTT protocol;
a management unit configured to receive the processed data from the control devices, the control unit comprising processing means configured to assess received processed data and to prepare instructions to the control devices
wherein the management unit is configured to send instructions to control devices and the control devices have actuators to implement the instructions received from the control unit.

The control device arranged at the entry of the main supply network is configured to receive operation data from its associated apparatus according to the capabilities of said apparatus: when the apparatus has some "intelligence" and has the ability of communicating or receiving instructions that affect their operation parameters (modulating the power consumption, modify the harmonic distortion or reducing the emission of some harmonics), the control device is configured to do it, but when the apparatus only has the ability of being turned on and off, the control device, despite having the ability of performing more complex duties, is limited by the reduced options provided by the associated apparatus.

In some particular embodiments, the management unit is configured to record the evolution of operation parameters of each apparatus in time. Hence, the management unit has a registered status of every apparatus comprised in the microgrid.

In some particular embodiments, the apparatuses comprise energy consumption apparatuses and/or distributed energy resources.

In this kind of microgrids, there are some apparatuses which generate energy and some apparatuses which consume energy. In both cases, a control is needed to check the quality of the energy since, in some cases, poor quality energy may be introduced in the system by the generation of "poor" energy and in other cases, poor quality energy is introduced in the system by a "poor" consumption of energy.

In some particular embodiments, the energy consumption apparatuses comprise at least one of dispatchable appliances, HVAC systems and electric water heaters; and the distributed energy resources comprise at least one of solar panels, wind generating units, battery storage, combined heat and power units, biomass generators, cycle gas turbines, reciprocating engines and fuel cells.

These are good examples of typical apparatuses which may be found in different embodiments of a microgrid. All of these apparatuses may be controlled by the corresponding control device, so that the energy that is introduced or demanded by any of these apparatuses is controlled so that the power quality of the grid is kept under control.

In some particular embodiments, the management unit is a cloud platform which is based on Fiware Open Source technology.

A cloud platform is not essential in this system, but, when present, provides a global view of the status of every apparatus of the system, due to the reception of data from the control devices. Therefore, global actions may be performed to manage the power quality of the entire grid, and these global actions are usually less radical than autonomous actuations.

In some particular embodiments, at least one control device comprises
a signal acquisition module, configured to receive and convert the power signal of the associated device or network and convert it to waveform digital signals
a microcontroller configured to receive the waveform digital signals, configured to generate processed data based on the calculation of a plurality of operation parameters, configured to send the processed data by a MQTT protocol and comprising a decision module configured to use the processed data to generate decisions; and
an actuator element, configured to receive the decisions from the decision module and to perform operations on the associated apparatus or network.

These control devices play an important role in the system of the invention. The control devices are not only configured to detect some details of the power consumption or generation of the associated apparatus. These control devices, in these particular embodiments, are configured to acquire the waveform and calculate, by means of an integrated microcontroller, a plurality of operation parameters in the same control device, so that these parameters may be transferred to a cloud platform by means of the MQTT protocol or may be internally used in a decision module comprised in the same microcontroller to perform actuations on the associated apparatus. Therefore, the set apparatus-control device may operate autonomously (by analyzing and deciding internally in the microcontroller of the control device) or as a network (by sending the calculated parameters to the cloud platform by means of the MQTT protocol and receiving instructions which globally consider all the power status of all the apparatuses of the microgrid.

The microcontroller is configured to calculate the operation parameters with the simple interposition of a signal acquisition module (such as an Analog to Digital Converter, ADC), so that all the calculations are performed within the microcontroller.

In some particular embodiments, the actuator element is configured to perform at least one of the following actions over the associated load or network: disconnecting, modulating and/or decreasing the total harmonic distortion and active power.

These actions are usually enough to have the power quality of the microgrid controlled, since the power quality may be compensated by acting on different apparatuses in different ways at the same time.

In some particular embodiments, the microcontroller is configured to produce all of the following parameters when receiving the waveform digital signals:
root mean square of the voltage aggregated every 150 cycles and 10 min;
root mean square of the current aggregated every 150 cycles and 10 min;
total power factor aggregated every 150 cycles and 10 min;
active power aggregated every 150 cycles and 10 min;
reactive power aggregated every 150 cycles and 10 min;
apparent power aggregated every 150 cycles and 10 min;
current harmonic subgrouping up to 50th order aggregated every 150 cycles and 10 min;
individual voltage harmonic subgrouping up to 50th order aggregated every 150 cycles and 10 min;
current harmonic distortion as a percentage of the fundamental current;
voltage harmonic distortion as a percentage of the fundamental voltage;
frequency aggregated every 150 cycles and 10 min;
duration and magnitude of the voltage sag and swell; and
temperature aggregated every 150 cycles and 10 min.

The calculation of all these parameters is performed according to the standard IEC 61000-4-30 and IEC 61000-4-7, due to the fact that these calculations are made by the microcontroller based on the waveform data obtained from the signal acquisition module.

In some particular embodiments, the decision module is configured to
receiving the calculated parameters of the associated apparatus
checking if the calculated parameters are comprised within allowed ranges
if a calculated parameter is outside the corresponding allowed range, then performing an actuation over the associated apparatus.

This is the autonomous mode, where the same microcontroller comprises a decision module which is configured to receive the calculated parameters from the calculation module of the same microcontroller and use them to directly operate on the associated apparatus, without receiving instructions from the cloud platform.

In some particular embodiments, the actuation over the associated apparatus comprises disconnecting or re-connecting it or instructing it to change its working mode.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a simplified scheme of a microgrid comprising a managing system according to the invention.
Figure 2 shows a detailed scheme of a control device comprised in a system for managing the power quality of a microgrid according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

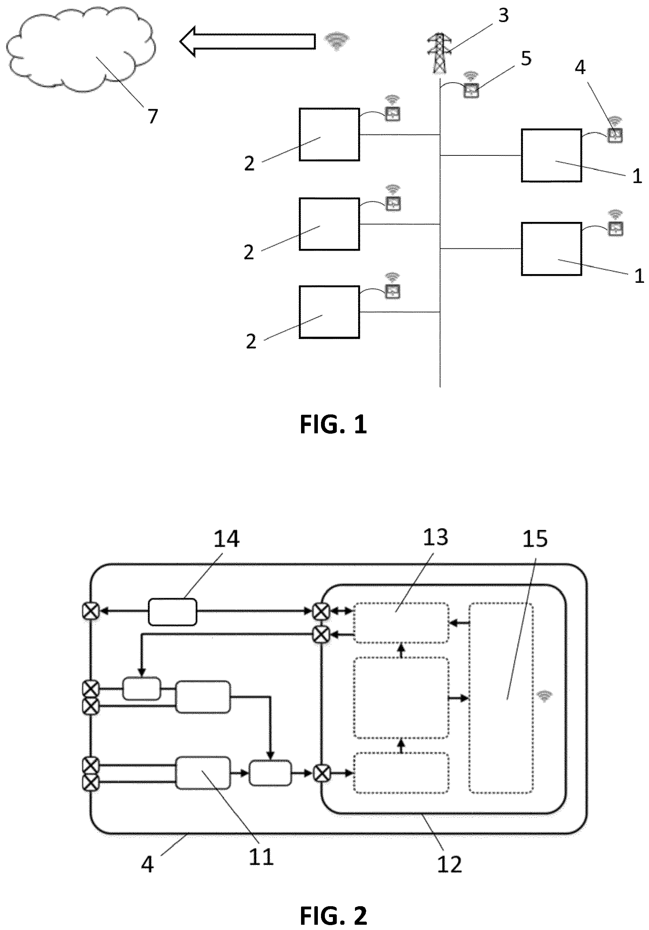

Figure 1 shows a simplified scheme of a microgrid comprising a managing system according to the invention.

There are some of energy consumption apparatuses 1, which comprise a HVAC system and an electric water heater. There are also some distributed energy resources 2, which comprise a group of solar panels, a wind tower and a storage battery.

These elements are a simplified example of a microgrid. A real one may comprise a greater number of devices, with more complex relations between each of them. The system of the invention may be used in any scenario, including these more complex ones. Each of these apparatuses 1, 2 has an associated control device 4. This control device 4 is connected in some way to the corresponding apparatus 1, 2 so that the control device 4 is able to acquire data about the power consumption and/or generation of the associated apparatus and in such a way that the control device 4 may intervene on the operation of the corresponding apparatus 1, 2, according to the capabilities of the corresponding apparatus 1, 2: if an apparatus only has an on-off switch, the corresponding control device 4 associated to this apparatus will only be able to act on this switch.

The system also comprises a main supply network 3, where the apparatuses 1, 2 are connected.

The entry of this system comprises an entry control device 5 associated thereto.

To complete the system, there is a cloud platform 7 which is configured to receive data from the control devices 4, 5 by means of a MQTT protocol, assess the data and, if necessary, send instructions to the control devices 4, 5 by means of the same protocol, so that each control device 4, 5, may perform some operations on its associated apparatus.

The control devices 4, 5 are configured to acquire data from the corresponding apparatus 1, 2. To do so, a first step of configuration of the corresponding control device 4, 5 is performed, since each apparatus has their own ranges, their own operation and their own waveform signals.

The control devices 4, 5 are therefore configured to monitor the relevant parameters of each apparatus, which comprise the sags and swells, the harmonic analysis, the RMS voltage and current, the energy and power factors, THDs, etc, as will be detailly explained when explaining the structure of the control devices 4 in figure 2.

There are two main operation modes in this system. In a first approach, each control device 4, 5 may operate autonomously. This means that each control device 4, 5 has the ability to acquire data, analyze these data and act on the corresponding apparatus 1, 2 to perform a local correction on the power parameters of this corresponding apparatus 1, 2. These actions are performed when the operation of the corresponding apparatus 1, 2 involves serious problems, so that these immediate and local actions are to be performed. However, there is a second approach, where a finer tune of the system is to be performed. For this second approach, the cloud platform is used to globally manage the operation of all the apparatuses at the same time. This allows the system to compensate the operation of one apparatus, that may not be working at its ideal working point, with the operation of another apparatus, that may not be working at its ideal working point either, but the operation of which compensates with the operation of the other apparatus. In this global approach, there may be no need to act on any of these two apparatuses, even though an individual action could have been performed if not considering the system as a whole.

The global cloud platform 7 is in charge of receiving data from the control devices 4, 5 and storing these data, creating a data log, trends, histograms, profiles, scatter charts and statistical tables.

With these data, the global cloud platform is able to create power quality trend forecasting, alarms, anticipated anomalies detection, real-time fault detection, correlation of power quality events and fault events and EMS operation logs.

With the creation of these events and logs, the global cloud platform 7 is enabled to both notify and send instructions, in the event of serious anomalies or faults. Notification and actuations may be sent when a power quality threshold is exceeded or when any other serious failure is detected or foreseen.

This global cloud platform 7 may also have undergone a machine learning algorithm, where a series of patterns are used as a training dataset, so that the evolution of the total system may be foreseen. With this training, the faults and events may be corrected and avoided even before happening.

The global cloud platform 7 is based on Fiware Open Source technology.

This global cloud platform 7 is also configured to record the evolution of operation parameters of each apparatus in time.

Figure 2 shows a detailed scheme of a control device 4, 5 comprised in a system for managing the power quality of a microgrid according to the invention.

This control device 4 comprises the following:
a signal acquisition module 11, configured to receive and convert the power signal of the associated device or network and convert it to waveform digital signals, by frequency sampling, retrieving waveform samples from the associated element through an SPI bus and data scaling according to hardware;
a microcontroller 12 configured to receive the waveform digital signals, configured to generate processed data based on the calculation of a plurality of operation parameters, configured to send the processed data by a communications module 15 and comprising a decision module 13 configured to use the processed data to generate decisions; and
an actuator element 14, configured to receive the decisions from the decision module and to perform operations on the associated apparatus or network.

As has been previously said, the actuator element 14 is configured to perform at least one of the following actions over the associated load or network: disconnecting, modulating and/or decreasing the total harmonic distortion and active power. These actions may be performed because the decision module has autonomously decided that are necessary or because the control device 4 receives instructions from the global cloud platform.

The microcontroller has a configuration which allows the control device to calculate a multitude of parameters within the microcontroller itself, without the need of a further device which make these calculations, based only on the waveform received by the signal acquisition module 11. Hence, the microcontroller is configured to produce the following parameters when receiving the waveform digital signals:
root mean square of the voltage aggregated every 150 cycles and 10 min;
root mean square of the current aggregated every 150 cycles and 10 min;
total power factor aggregated every 150 cycles and 10 min;
active power aggregated every 150 cycles and 10 min;
reactive power aggregated every 150 cycles and 10 min;
apparent power aggregated every 150 cycles and 10 min;
current harmonic subgrouping up to 50th order aggregated every 150 cycles and 10 min;
individual Voltage harmonic subgrouping up to 50th order aggregated every 150 cycles and 10 min;
current harmonic distortion as a percentage of the fundamental current;
voltage harmonic distortion as a percentage of the fundamental voltage;
frequency aggregated every 150 cycles and 10 min;
duration and magnitude of the voltage sag and swell; and
temperature aggregated every 150 cycles and 10 min.

The calculation of all these parameters is performed according to the standard IEC 61000-4-30 and IEC 61000-4-7 so that the conformity of these values with the standard ones may be immediately checked.

The communication module 15, data is formatted conforming the Fiware native protocol (NGSI) and communication is performed by the MQTT protocol. This also enables communication management with other control devices, to ensure synchronization of the data sent by all the control devices 4.

Hence, in autonomous operation, the decision module is configured to perform the following steps:
receiving the calculated parameters of the associated apparatus, which have been calculated according to the aforementioned standards;
checking if the calculated parameters are comprised within allowed ranges, which is immediately done, due to the fact that the calculated parameters are according to the standards; and
if a calculated parameter is outside the corresponding allowed range, then performing an actuation over the associated apparatus.

The specific actuation that the actuator module performs over the associated apparatus depends on the options which are available in this apparatus, but usually comprises disconnecting or re-connecting it or instructing it to change its working mode.

For example, if a harmonic distortion is detected, either in voltage or in current, the actuator module of the control device may disconnect the associated apparatus or may try to change the operation mode to a mode where the harmonics are comprised within an allowable range, according to the corresponding standard.

These variations in the harmonics distribution, or in the frequency or in the voltage value of power generation apparatuses is usually controlled in the autonomous mode, since these perturbations are usually caused by a single apparatus. However, a global scenario, provided by the global cloud platform, may suggest the modification of the operation mode of a group of apparatuses, to optimize the global operation of the microgrid.

Some voltage or current perturbations are comprised within accepted ranges, and may not cause, by themselves any actuation on the corresponding apparatus.

Global energy consumption (or generation) may also be controlled due to different standards or motivations. In this sense, the system of the invention is also advantageous to perform either an apparatus-by-apparatus control (with the autonomous mode applied to the energy consumption) or a global approach control with the use of the global cloud platform, which may decide which apparatus should be switched off or turned to an ECO mode.

## Claims

1. System for managing the power quality of a microgrid, the microgrid comprising a plurality of apparatuses (1, 2), wherein the system comprises:
a main supply network (3), where the apparatuses (1, 2) are connected;
a plurality of control devices (4), each control device (4) being associated to one of the apparatuses (1, 2), wherein each control device (4) is configured to receive operation data from its associated apparatus (1, 2) and configured to send these operation data via a MQTT protocol;
an entry control device (5) arranged at the entry of the main supply network (3), the entry control device (5) being configured to receive operation data from the entry of the main supply network (3) and configured to send processed data via a MQTT protocol;
a management unit (7) configured to receive the processed data from the control devices, the control unit comprising processing means configured to assess received processed data and to prepare instructions to the control devices;
wherein the management unit is configured to send instructions to the control devices and each control device has actuators to actuate on its associated apparatus.

2. System according to claim 1, wherein the apparatuses comprise energy consumption apparatuses (1) and/or distributed energy resources (2).

3. System according to claim 2, wherein
the energy consumption apparatuses (1) comprise at least one of dispatchable appliances, HVAC systems and electric water heaters; and
the distributed energy resources (2) comprise at least one of solar panels, wind generating units, battery storage, combined heat and power units, biomass generators, cycle gas turbines, reciprocating engines and fuel cells.

4. System according to any of the preceding claims, wherein the management unit (7) is a cloud platform which is based on Fiware Open Source technology.

5. System according to any of the preceding claims, wherein at least one control device (4) comprises
a signal acquisition module (11), configured to receive and convert the power signal of the associated device or network and convert it to waveform digital signals
a microcontroller (12) configured to receive the waveform digital signals, configured to generate processed data based on the calculation of a plurality of operation parameters, configured to send the processed data by a MQTT protocol and comprising a decision module (13) configured to use the processed data to generate decisions; and
an actuator element (14), configured to receive the decisions from the decision module and to perform operations on the associated apparatus or network.

6. System according to claim 5, wherein the actuator element (14) is configured to perform at least one of the following actions over the associated load or network: disconnecting, modulating and/or decreasing the total harmonic distortion and active power.

7. System according to any of claims 5 or 6, wherein the microcontroller is configured to produce all of the following parameters when receiving the waveform digital signals:
root mean square of the voltage aggregated every 150 cycles and 10 min;
root mean square of the current aggregated every 150 cycles and 10 min;
total power factor aggregated every 150 cycles and 10 min;
active power aggregated every 150 cycles and 10 min;
reactive power aggregated every 150 cycles and 10 min;
apparent power aggregated every 150 cycles and 10 min;
current harmonic subgrouping up to 50th order aggregated every 150 cycles and 10 min;
individual Voltage harmonic subgrouping up to 50th order aggregated every 150 cycles and 10 min;
current harmonic distortion as a percentage of the fundamental current;
voltage harmonic distortion as a percentage of the fundamental voltage;
frequency aggregated every 150 cycles and 10 min;
duration and magnitude of the voltage sag and swell; and
temperature aggregated every 150 cycles and 10 min.

8. System according to any of claims 5 to 7, wherein the decision module is configured to
receiving the calculated parameters of the associated apparatus
checking if the calculated parameters are comprised within allowed ranges
if a calculated parameter is outside the corresponding allowed range, then performing an actuation over the associated apparatus.

9. System according to claim 8, wherein the actuation over the associated apparatus comprises disconnecting or re-connecting it or instructing it to change its working mode.

10. System according to any of claims 5 to 9, wherein the decision module is also configured to receive instructions directly from the management unit (7).

11. System according to any of the preceding claims, wherein the management unit is configured to record the evolution of operation parameters of each apparatus in time.

## Amended claims

### Amended claims in accordance with Rule 137(2) EPC.

1. System for managing the power quality of a microgrid, the microgrid comprising a plurality of apparatuses (1, 2), wherein the system comprises:
a main supply network (3) comprising an entry, wherein the apparatuses (1, 2) are connected to the main supply network (3);
a plurality of control devices (4), each control device (4) being associated to one of the apparatuses (1, 2), wherein each control device (4) is configured to receive operation data from its associated apparatus (1, 2) and configured to send these operation data via a MQTT protocol, wherein the control devices are configured to monitor relevant parameters of its associated apparatus, the relevant parameters being at least one of sags and swells, the harmonic analysis, the RMS voltage and current, energy and power factors and Total Harmonic Distortion;
an entry control device (5) associated to the entry of the main supply network (3), the entry control device (5) being configured to receive operation data from the entry of the main supply network (3) and configured to send processed data via a MQTT protocol;
a management unit (7) configured to receive the processed data from the control devices, the management unit (7) comprising processing means configured to assess received processed data and to prepare instructions to the control devices;
wherein
the management unit is configured to send instructions to the control devices and each control device has actuators to actuate on its associated apparatus
the management unit is able to create power quality trend forecasting, alarms, anticipated anomalies detection, real-time fault detection, correlation of power quality events and fault events and energy management system operation logs;
at least one control device (4) comprises
a signal acquisition module (11), configured to receive and convert the power signal of the associated device or network and convert it to waveform digital signals
a microcontroller (12) configured to receive the waveform digital signals, configured to generate processed data based on calculating a plurality of operation parameters, thus obtaining calculated parameters, the microcontroller (12) being also configured to send the processed data by a MQTT protocol and comprising a decision module (13) configured to use the processed data to generate decisions; and
an actuator element (14), configured to receive the decisions from the decision module and to perform operations on the associated apparatus or network
the microcontroller is configured to produce all of the following parameters when receiving the waveform digital signals:
root mean square of the voltage aggregated every 150 cycles and 10 min;
root mean square of the current aggregated every 150 cycles and 10 min;
total power factor aggregated every 150 cycles and 10 min;
active power aggregated every 150 cycles and 10 min;
reactive power aggregated every 150 cycles and 10 min;
apparent power aggregated every 150 cycles and 10 min;
current harmonic subgrouping up to 50th order aggregated every 150 cycles and 10 min;
individual Voltage harmonic subgrouping up to 50th order aggregated every 150 cycles and 10 min;
current harmonic distortion as a percentage of the fundamental current;
voltage harmonic distortion as a percentage of the fundamental voltage;
frequency aggregated every 150 cycles and 10 min;
duration and magnitude of the voltage sag and swell; and
temperature aggregated every 150 cycles and 10 min..

2. System according to claim 1, wherein the apparatuses comprise energy consumption apparatuses (1) and/or distributed energy resources (2).

3. System according to claim 2, wherein
the energy consumption apparatuses (1) comprise at least one of dispatchable appliances, HVAC systems and electric water heaters; and
the distributed energy resources (2) comprise at least one of solar panels, wind generating units, battery storage, combined heat and power units, biomass generators, cycle gas turbines, reciprocating engines and fuel cells.

4. System according to any of the preceding claims, wherein the management unit (7) is a cloud platform which is based on Fiware Open Source technology.

5. System according to any of the preceding claims, wherein the actuator element (14) is configured to perform at least one of the following actions over the associated load or network: disconnecting, modulating and/or decreasing the total harmonic distortion and active power.

6. System according to any of the preceding claims, wherein the decision module is configured to
receiving the calculated parameters of the associated apparatus
checking if the calculated parameters are comprised within allowed ranges
if a calculated parameter is outside the corresponding allowed range, then performing an actuation over the associated apparatus.

7. System according to claim 6, wherein the actuation over the associated apparatus comprises disconnecting or re-connecting it or instructing it to change its working mode.

8. System according to any of the preceding claims, wherein the decision module is also configured to receive instructions directly from the management unit (7).

9. System according to any of the preceding claims, wherein the management unit is configured to record the evolution of operation parameters of each apparatus in time.
